# EUROPEAN PATENT SPECIFICATION

(11) **EP 4 710 759 B1**
(45) Date of publication and mention of the grant of the patent: **02.09.2026**
(21) Application number: 24000114.9
(22) Date of filing: 17.09.2024
(51) Int. Cl.: A01M 1/02, A01M 1/10, H04N 19/46

(54) **METHOD FOR SIGNALLING THE SWARMING DYNAMICS OF INSECT PESTS**
VERFAHREN ZUR SIGNALISIERUNG DER SCHWARMDYNAMIK VON INSEKTENSCHÄDLINGEN
PROCÉDÉ DE SIGNALISATION DE LA DYNAMIQUE D'ESSAIM D'INSECTES NUISIBLES

(43) Date of publication of application: 18.03.2026
(73) Proprietor: Smapp Labs Kft., 1027 Budapest (HU)
(72) Inventor: Posta, Donát Benedek, H-2054 Törökbälint (HU)
(74) Representative: Ronaszéki, Tibor

(56) References cited:
- CN-A- 108 651 410
- DE-U1- 202021 106 261
- US-A1- 2020 117 897
- US-A1- 2021 029 984

## Description

The subject of the invention relates to a method for signalling the swarming dynamics of insect pests, during which the insect pests are captured in a trap, then images are recorded of the trapped insect pests using an image-recording device, and a digitized information package is created from the image in a local info-communication unit, following this the digitized information package is transmitted to a remote access processing unit via a communication channel, where the image is restored from the digitized information package, then the restored image is evaluated, and then protection against the insect pest is performed depending on the result of the evaluation.

Supplying the continuous and accelerating expansion of the population of the Earth with plant materials has made it compulsory and the spreading of info-communication networks has made it possible for IT device-supported solutions facilitating cost optimisation and yield improvement to become increasingly widespread in the fields of plant cultivation and plant protection.

These solutions include those devices and methods with which the reproduction of pests may be monitored in a given cultivation area, and depending on the degree of reproduction, on the basis of its analysis, the necessary protection may be performed in the most appropriate period from the point of view of pest control.

Such a solution is disclosed, for example, in patent specification with registration number EP 3.199.022, the essence of which is that a trap fitted with an intelligent device is placed in a given cultivation area, then the trap is used to trap insect pests that may be found there. Images are made of the trapped insect pests, which are sent to an IT device for analysis where they are analysed, then the result of the analysis is transmitted back to the display device attached to the trap.

The method according to patent specification registration number EP 3.482.630 provides knowledge regarding sending images made of trapped insect pests, along with other data, such as the geo coordinates of the given trap, to a remote access processing location via a communications device, where they are analysed by computer and an algorithm running on it, and on the basis of the analysis a forecast is made relating to a given period on the swarm dynamics of the observed inspect pests, thereby making protection easier.

Further example methods wherein insects or traps are monitored using image data are known from CN 108 651 410 A, DE 20 2021 106261 U1, US 2020/117897 A1 and US 2021/029984 A1.

In the case of all of the known solutions it is a fundamentally important requirement to take a sharp image of the trapped insect pests and send it to the remote analysis centre on the basis of which it is possible to make a precise identification of the individual insect pests. However, for this a large data package has to be sent from the trap to the remote analysis centre. As a consequence of this a significant disadvantage of the solutions used at present is that data packages satisfying the requirement of precision containing a large amount of information may only be transmitted with the use of a suitable network, such as a 3G, 4G or 5G network. A great disadvantage originating from this is that it is expensive due to the hardware demand required for sending the data. Another significant disadvantage is that due to the long data-sending time the probability of data errors increases, which may reduce the efficiency of the evaluation, and may even, in a given case, make it impossible. Yet another disadvantage is that the networks suitable for the transmission of large data packages are not available at all locations where needed due to agricultural cultivation. In addition, in the case of slower, smaller capacity communications networks the transmission of large data packages currently in use is either impossible or so slow so as to significantly reduce usability and efficiency.

Our objective with the solution according to the invention was to overcome the deficiencies of the known devices and methods and to create a version that makes it possible to transmit sharp and, therefore, easily accessible images made about the trapped insect pests without any substantial data erroring a simple, fast and cheap way, even in the case of lower capacity networks, and in this way significantly broaden the limits of the possibility of effective protection against insect pests.

The recognition that led to the creation of the method according to the invention was that if following local digitisation the sharp image taken of the trapped insect pests is uniquely separated into divided image information elements in an unconventional way, and then these small data packages are given novel identification, then these small data packages provided with novel identification may be sent to the remote-access processing unit quickly, without error, in a short amount of time, with the installation of cheaper hardware devices and so with a significantly lower specific cost investment even on a lower capacity communication network, where, on the remote-access processing unit network, the sharp image may be restored without error, and so the task may be solved.

In accordance with the set objective, the method according to the invention for signalling the swarming dynamics of insect pests, - during which the insect pests are captured in a trap, then images are recorded of the trapped insect pests using an image-recording device, and a digitized information package is created from the image in a local info-communication unit, following this the digitized information package is transmitted to a remote access processing unit via a communication channel, where the image is restored from the digitized information package, then the restored image is evaluated, and then protection against the insect pest is performed depending on the result of the evaluation, - is based on the principle that before the transmission of the digitized information package at least two digital image segments with differing information content are formed from the image in the local info-communication unit, following this a unique identification information tag is linked to the individual digital image segments, and in this way a divided image information element to be transmitted is created, where at least origin identification data of the given digital image segment, time identification data, sequence data and check data is integrated into the unique identification information tag, following this the individual divided image information elements are lined up one after the other, and the digitized information package is created in this way, then the divided image information elements constituting the digitized information package are transmitted one after the other via the communications channel to the remote access processing unit, first of all the unique identification information tags of the incoming divided image information elements are read in the remote access processing unit, and then the sequence data are interpreted, and on the basis of this the digital image segments of the incoming divided image information elements are set into the correct order and integrated, and reunited digital image information is made in this way, following this the image is restored using the remote access processing unit from the reunited digital image information, and then the evaluation is performed only after this.

A further feature of the method according to the invention may be that one or more environmental parameter sensors are placed in the vicinity of the trap, and one or more physical characteristics of the environment of the trap are measured, then the measured physical characteristics are transmitted to the local info-communications unit, where the value of the transmitted physical characteristic is processed, and in this way processed environmental data is produced, and after this the processed environmental data is integrated into the unique identification information tag of the divided image information element as environmental data.

In the case of another implementation of the method, a temperature sensor, and/or humidity sensor, and/or precipitation amount sensor are used as environmental parameter sensor.

In the case of yet another implementation of the method according to the invention, the device identifier of the given trap is used as origin identification data in the unique identification information tag of the divided image information element or the GPS coordinates of the given trap are used as the origin identification data in the unique identification information tag of the divided image information element.

From the point of view of the method according to the invention, it may be preferable if divided image information elements of a size of up to 50 kB are created, and, additionally, if a maximum 50 kBps transmission speed communication network is used as communications channel.

When the method according to the invention is implemented the communications network may be a 2G GSM network, or satellite network, or radio frequency network, such as a LORA network.

The method according to the invention has numerous preferable characteristics. The most important of these is that as a consequence of the unconventional "image chopping" used, with the uniquely identified small data packages it is possible to efficiently transmit shape images from the trap to the remote access processing unit through the weakest of communication networks, and in this way efficient insect pest protection may be distributed to a much wider extent. An additional advantage of this is that in the given cultivation area, as a result of the more efficient protection, the production yield is increased and the specific protection costs are reduced.

A further advantage is that due to the significant reduction in the probability of data errors, the sharpness of the images may also be suitable in the remote access processing unit, and in this way the identification of the insect pests may be performed in a more efficient way, which also has a beneficial effect on the efficiency of protection.

Another feature that must be treated as an advantage is that the small data packages, i.e. the individual divided image information elements may be transmitted quickly, which further reduces the possibility of data transmission errors, which may make the use of the method according to the invention even more reliable compared to the known solutions.

Another advantage is that simpler and cheaper hardware devices are also suitable for transmitting the smaller data packages. In this way the device costs of implementing the method are also lower, which may make the investment even more economical.

In summary, with the use of the method according to the invention significantly greater areas of cultivation land may be involved in efficient protection against insect pests, as a consequence of which production yields may be increased, while the costs of protection may be reduced and optimised. This, in addition, may represent an important step forward from the point of view of food production on the global economic level.

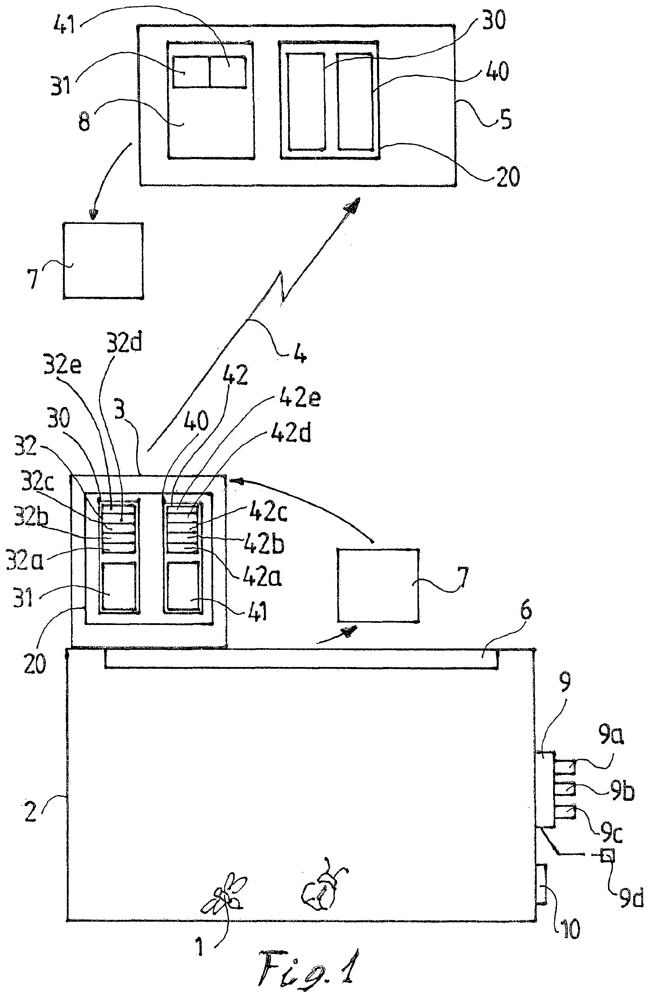

The method according to the invention is first of all presented in more detail in connection with embodiments with reference to figures, wherein
Figure 1 shows a schematic view of the devices and data structure used for the implementation of the method according to the invention.

Figure 1 shows a possible version of the set of devices that may be used for the implementation of the method according to the invention. The trap 2 in which the insect pests 1 may be collected may be observed. The image recording device 6 is positioned opposite to the sticky surface of the trap 2 that captures the insect pests 1, the task of which is to make an image 7 at a given frequency or at a specific point in time of the insect pests 1 trapped in the internal space of the trap 2.

The image recording device 6 is connected to the local info-communication unit 3, which is also preferably secured to the trap 2. The environmental parameter sensor 9 is located in the vicinity of the trap 2 and is preferably connected to the trap 2, which may also have various types of measuring sensor. In the case of the given embodiment the environmental parameter sensor 9 contains a temperature sensor 9a, a humidity sensor 9b, a precipitation amount sensor 9c and a leaf wetness sensor 9d; but it may also contain numerous additional sensors not named here but providing valuable information from the point of view of protection.

It may also be observed in figure 1 how the local info-communications unit 3 transforms the image 7 into a digitized information package 20 using the algorithm running in it. It may be seen that in order to transform the image 7 into a digitized information package 20 the image 7 is first of all separated, here for the sake of simplicity, into only two, into divided image information element 30 and divided information element 40. The divided image information element 30 contains a digital image segment 31 and a unique identification information tag 32. The unique identification information tag 32 consists of origin identification data 32a, time identification data 32b, sequence data 32c, check data 32d and, here, environmental data 32e as well.

The divided information element 40, similarly to divided information element 30, has a digital image segment 41 and a unique identification information tag 42. In this case, the unique identification information tag 42 also contains origin identification data 42a, time identification data 42b, sequence data 42c, check data 42d and environmental data 42e.

The origin identification data 32a and the origin identification data 42a contain information relating to the trap 2 the given image 7 was made of. Therefore, the origin identification data 32a and the origin identification data 42a themselves may be the device identification data 10 of the given trap 2, but may also be the given trap's 2 geocoordinates, i.e. GPS data as well. Naturally, in the case of a given image 7, the origin identification data 32a and the origin identification data 42a must be identical.

By definition, the time identification data 32b and the time identification data 42b record the time point when the image 7 was recorded, which are also identical in a divided information element 30 and divided information element 40 belonging to one image 7.

However, the sequence data 32c and the sequence data 42c are, in all cases, different. The reason for this is that this information in the case of a given image 7 states the ordinal number of the divided information element 30 or the divided information element 40 in the entire digitized information package 20. Without the sequence data 32c and the sequence data 42c it would not be possible to properly reproduce the image 7 in the remote access processing unit 5.

The check data 32d and the check data 42d contain technical information in the interest of deciding whether the divided information element 30 and the divided information element 40 arriving in the remote access processing unit 5 have arrived through the communications channel 4 into the remote access processing unit 5 without error.

The environmental data 32e and the environmental data 42e contain information collected by the environmental parameter sensors 9 about the vicinity of the trap 2.

The combined divided information element 30 and the divided information element 40 constitute the digitized information package 20 that the local info-communications unit 3 transmits via the communications channel 4 to the remote access processing unit 5.

Figure 1 also shows that the communication channel 4 connects the local info-communications unit 3 to the remote access processing unit 5, preferably via a wireless connection. It should be noted here that it is sufficient if the communications channel 4 is capable of a data transmission speed of 50 kBps, because the divided information element 30 and the divided information element 40 are data packages of a size of up to 50 kB. The reason for this is that the otherwise large, sharp and precise image 7 in this way can be quickly transmitted to its destination from the trap 2 without error and with a short network use time, and so with a small cost investment. The communications channel itself may be a part of a 2G network, but the use of a satellite connection or even the "LORA" network is also conceivable, as is essentially any RF signal transmission network. The important requirement is that the communications channel 4 be a part of a network that has large territorial coverage, and the signal transmission have a constant strength.

The checking of the data content of the incoming divided information element 30 and the divided information element 40, the reading of the information, and the linking of the digital image segment 31 and the digital image segment 41 in the correct order on the basis of the sequence data 32c and the sequence data 42c take place in the remote access processing unit 5, as a result of which the reunited digital image information 8 is produced in the remote access processing unit 5 using the algorithm operating there, from which an image 7 may be restored that has the same sharpness and precision as the original.

In the following the method according to the invention is disclosed in detail through the presentation of an example of the method.

### Example 1:

In the method according to the example traps 2 are located in a maize field in which we wished to observe the swarming dynamics of the insect pest 1 the cotton bollworm. In the interest of this the local info-communications unit 3 was set to take an image 7 using the image recording device 6 at six o'clock every morning. After the image 7 was taken the image 7 was transmitted from the image recording device 6 to the local info-communication unit 3. At the same time as this the values measured by the environmental parameter sensors 9, in this case measured the temperature sensor 9a, the humidity sensor 9b, the precipitation amount sensor 9c and the leaf wetness sensor 9d were also sent to the local info-communications unit 3.

Then a digitized information package 20 was created from the image 7 in the local info-communications unit 3 using the algorithm running there. For this, first of all, the image 7 was separated into the digital image segment 31 and the digital image segment 41. The size of the digital image segment 31 and the digital image segment 41 was selected so that the total size of the final divided information element 30 and the divided information element 40 does not exceed 50 kB.

Following this the unique identification information tag 32 was produced, into which the time identification data 32b recording the time the image 7 was taken, the origin identification data 32a suitable for identifying the given trap 2, and the sequence data 32c, which contained information about the ordinal number of the digital image segment 31 in the entire image 7 was incorporated. In addition, check data 32d was created to check the content of the origin identification data 32a, the time identification data 32b and the sequence data 32c, and this too was integrated into the unique identification information tag 32.

In this the unique identification information tag 32 was also supplemented with the information sent from the environmental parameter sensors 9 into the local info-communications unit 3. The completed unique identification information tag 32 was linked to the digital image segment 31 and with this the divided image information element 30 was created. This same series of operations was also performed in connection with the digital image segment 41, in combination with the unique identification information tag 42 the divided image information element 40 was also created. Finally, by unifying the divided image information element 30 and the divided image information element 40 the digitized information package 20 was created, which essentially contained the image 7 and the digitized data of the environmental parameters associated with taking the image 7 broken down into parts.

After the digitized information package 20 was created, the digitized information package 20 was transmitted to the remote access processing unit 5 via the communications channel 4. The digitized information package 20 was transmitted via the communications channel 4 of an information technology network, a 2G network in the given case, with a maximum transmission speed of 50 kBps in such a way that the divided image information element 30 and the divided image information element 40 were sent one after the other from the trap 2 to the remote access processing unit 5. It should be noted here that other information technology networks may also be used for this purpose, but the use of information technology networks that have a large coverage, provide reliable data transfer and involve favourable costs is preferable.

The incoming divided image information element 30 and divided image information element 40 of the digitized information package 20 were subjected to a check in the remote access processing unit 5. During this it was examined whether the information included in the divided image information element 30 and the divided image information element 40 was corrupted during transmission using the check data 32d and the check data 42d. Then the sequence data 32c and the sequence data 42c were read. In the possession of this data the digital image segment 31 and the digital image segment 41 were arranged in the correct order, then unified and so the reunited digital image information 8 was created. The data providing the identification of the given trap 2 was attached to the reunited digital image information 8, which is the origin identification data 32a and the origin identification data 42a as well, as was the time when the image 7 was taken and the related environmental characteristics. The image 7 was restored from these digital signals and then stored in the remote access processing unit 5.

The following day the method disclosed previously was repeated in connection with the given trap 2, and in this way a restored image from 24 hours later was created, which was also stored in the remote access processing unit 5. The earlier and the later images 7 were compared, and conclusions relating to protection were drawn from the change in the number of insect pests 1 and the values of the environmental conditions.

On the basis of the conclusions effective protection may be planned and executed. This means that the optimal control of the insect pests 1 may be realised in the swarming period of the insect pests 1 with a smaller amount of pesticide and less human labour. In this way therefore, using the method according to the invention the decision-preparation process may be realised in a fast and precise way, with a favourable investment of costs.

### List of references

| | | | |
|---|---|---|---|
| 1 | insect pest | | |
| 2 | trap | | |
| 3 | local info-communications unit | | |
| 4 | communications channel | | |
| 5 | remote access processing unit | | |
| 6 | image recording device | | |
| 7 | image | | |
| 8 | reunited digital image information | | |
| 9 | environmental parameter sensor | 9a | temperature sensor |
| | | 9b | humidity sensor |
| | | 9c | precipitation amount sensor |
| 10 | device identification data | 9d | leaf wetness sensor |
| 20 | digitized information package | | |
| 30 | divided image information element | 31 | digital image segment |
| | | 32 | unique identification information tag |
| | | 32a | origin identification data |
| | | 32b | time identification data |
| | | 32c | sequence data |
| | | 32d | check data |
| | | 32e | environmental data |
| 40 | divided image information element | 41 | digital image segment |
| | | 42 | unique identification information tag |
| | | 42 | origin identification data |
| | | 42b | time identification data |
| | | 42c | sequence data |
| | | 42d | check data |
| | | 42e | environmental data |

## Claims

1. Method for signalling the swarming dynamics of insect pests, during which the insect pests (1) are captured in a trap (2), then images (7) are recorded of the trapped insect pests (1) using an image-recording device (6), and a digitized information package (20) is created from the image (7) in a local info-communication unit (3), following this the digitized information package (20) is transmitted to a remote access processing unit (5) via a communication channel (4), where the image (7) is restored from the digitized information package (20), then the restored image (7) is evaluated, and then protection against the insect pest (1) is performed depending on the result of the evaluation, wherein before the transmission of the digitized information package (20) at least two digital image segments (31, 41) with differing information content are formed from the image (7) in the local info-communication unit (3), following this a unique identification information tag (32, 42) is linked to the individual digital image segments (31, 41), and in this way a divided image information element (30, 40) to be transmitted is created, where at least origin identification data (32a, 42a) of the given digital image segment (31, 41), time identification data (32b, 42b), sequence data (32c, 42c) and check data (32d, 42d) is integrated into the unique identification information tag (32, 42), following this the individual divided image information elements (30, 40) are lined up one after the other, and the digitized information package (20) is created in this way, then the divided image information elements (30, 40) constituting the digitized information package (20) are transmitted one after the other via the communications channel (4) to the remote access processing unit (5), first of all the unique identification information tags (32, 42) of the incoming divided image information elements (30, 40) are read in the remote access processing unit (5), and then the sequence data (32c, 42c) are interpreted, **characterised in that**, on the basis of this the digital image segments (31, 41) of the incoming divided image information elements (30, 40) are set into the correct order and integrated, and reunited digital image information (8) is made in this way, following this the image (7) is restored using the remote access processing unit (5) from the reunited digital image information (8), and then the evaluation is performed only after this.

2. Method according to claim 1, **characterised by** that one or more environmental parameter sensors (9) are placed in the vicinity of the trap (2), and one or more physical characteristics of the environment of the trap (2) are measured, then the measured physical characteristics are transmitted to the local info-communications unit (3), where the value of the transmitted physical characteristic is processed, and in this way processed environmental data is produced, and after this the processed environmental data is integrated into the unique identification information tag (32, 42) of the divided image information element (30, 40) as environmental data (32e, 42e).

3. Method according to claim 2, **characterised by** that a temperature sensor (9a), and/or humidity sensor (9b), and/or precipitation amount sensor (9c), and/or leaf wetness sensor (9d) are used as environmental parameter sensor (9).

4. Method according to any of claims 1 to 3, **characterised by** that the device identifier (10) of the given trap (2) is used as origin identification data (32a, 42a) in the unique identification information tag (32, 42) of the divided image information element (30, 40).

5. Method according to any of claims 1 to 4, **characterised by** that the GPS coordinates of the given trap (2) are used as the origin identification data (32a, 42a) in the unique identification information tag (32, 42) of the divided image information element (30, 40).

6. Method according to claim 1, **characterised by** that divided image information elements (30, 40) of a size of up to 50 kB are created.

7. Method according to any of claims 1 to 5, **characterised by** that a maximum 50 kBps transmission speed communication network is used as communications channel (4).

8. Method according to claim 7, **characterised by** that the communications network is a 2G GSM network.

9. Method according to claim 7, **characterised by** that the communications network is a satellite network.

10. Method according to claim 7, **characterised by** that the communications network is a radio frequency network, e.g. LORA network.

## Patentansprüche

1. Verfahren zur Signalisierung der Schwarmdynamik von Insektenschädlingen, bei dem die Insektenschädlinge (1) in einer Falle (2) gefangen werden, anschließend mittels einer Bildaufnahmevorrichtung (6) Bilder (7) der gefangenen Insektenschädlinge (1) aufgenommen werden, und aus dem Bild (7) in einer lokalen Informations- und Kommunikationseinheit (3) ein digitalisiertes Informationspaket (20) erstellt wird, woraufhin das digitale Informationspaket (20) über einen Kommunikationskanal (4) an eine Verarbeitungseinheit mit Fernzugriff (5) übertragen wird, wo das Bild (7) aus dem digitalisierten Informationspaket (20) wiederhergestellt wird, anschließend das wiederhergestellte Bild (7) ausgewertet wird, und danach in Abhängigkeit vom Ergebnis der Auswertung ein Schutz gegen den Insektenschädling (1) durchgeführt wird, wobei vor der Übertragung des digitalisierten Informationspakets (20) aus dem Bild (7) in der lokalen Informations- und Kommunikationseinheit (3) mindestens zwei digitale Bildsegmente (31, 41) mit unterschiedlichem Informationsgehalt gebildet werden, woraufhin den einzelnen digitalen Bildsegmenten (31, 41) eine eindeutige Identifikationsinformationskennung (32, 42) zugeordnet wird, und auf diese Weise ein zu übertragendes geteiltes Bildinformationselement (30, 40) erstellt wird, wobei in die eindeutige Identifikationsinformationskennung (32, 42) mindestens Ursprungsidentifikationsdaten (32a, 42a) des jeweiligen digitalen Bildsegments (31, 41), Zeitidentifikationsdaten (32b, 42b), Sequenzdaten (32c, 42c) und Prüfdaten (32d, 42d) integriert werden, woraufhin die einzelnen geteilten Bildinformationselemente (30, 40) nacheinander aneinandergereiht werden, und auf diese Weise das digitale Informationspaket (20) erstellt wird, dann die das digitale Informationspaket (20) bildenden geteilten Bildinformationselemente (30, 40) nacheinander über den Kommunikationskanal (4) an die Verarbeitungseinheit mit Fernzugriff (5) übertragen werden, wobei in der Verarbeitungseinheit mit Fernzugriff (5) zunächst die eindeutigen Identifikationsinformationskennungen (32, 42) der eingehenden geteilten Bildinformationselemente (30, 40) gelesen werden, und anschließend die Sequenzdaten (32c, 42c) interpretiert werden, **dadurch gekennzeichnet, dass** auf dieser Grundlage die digitalen Bildsegmente (31, 41) der eingehenden geteilten Bildinformationselemente (30, 40) in die korrekte Reihenfolge gebracht und zusammengeführt werden, und auf diese Weise eine wiedervereinigte digitale Bildinformation (8) erzeugt wird, woraufhin das Bild (7) mittels der Verarbeitungseinheit mit Fernzugriff (5) aus der wiedervereinigten digitalen Bildinformation (8) wiederhergestellt wird, und die Auswertung erst danach durchgeführt wird.

2. Verfahren nach Anspruch 1, **dadurch gekennzeichnet, dass** in der Umgebung der Falle (2) ein oder mehrere Umgebungsparametersensoren (9) angeordnet werden, und eine oder mehrere physikalische Eigenschaften der Umgebung der Falle (2) gemessen werden, woraufhin die gemessenen physikalischen Eigenschaften an die lokale Informations- und Kommunikationseinheit (3) übertragen werden, wo der Wert der übertragenen physikalischen Eigenschaft verarbeitet wird, und auf diese Weise verarbeitete Umgebungsdaten erzeugt werden, und diese verarbeiteten Umgebungsdaten anschließend als Umgebungsdaten (32e, 42e) in die eindeutige Identifikationsinformationskennung (32, 42) des geteilten Bildinformationselements (30, 40) integriert werden.

3. Verfahren nach Anspruch 2, **dadurch gekennzeichnet, dass** als Umgebungsparametersensor (9) ein Temperatursensor (9a) und/oder ein Feuchtigkeitssensor (9b) und/oder ein Niederschlagsmengensensor (9c) und/oder ein Blattfeuchtesensor (9d) verwendet werden.

4. Verfahren nach einem der Ansprüche 1 bis 3, **dadurch gekennzeichnet, dass** als Ursprungsidentifikationsdaten (32a, 42a) in der eindeutigen Identifikationsinformationskennung (32, 42) des geteilten Bildinformationselements (30, 40) die Gerätekennung (10) der jeweiligen Falle (2) verwendet wird.

5. Verfahren nach einem der Ansprüche 1 bis 4, **dadurch gekennzeichnet, dass** als Ursprungsidentifikationsdaten (32a, 42a) in der eindeutigen Identifikationsinformationskennung (32, 42) des geteilten Bildinformationselements (30, 40) die GPS-Koordinaten der jeweiligen Falle (2) verwendet werden.

6. Verfahren nach Anspruch 1, **dadurch gekennzeichnet, dass** geteilte Bildinformationselemente (30, 40) mit einer Größe von bis zu 50 kB erstellt werden.

7. Verfahren nach einem der Ansprüche 1 bis 5, **dadurch gekennzeichnet, dass** als Kommunikationskanal (4) ein Kommunikationsnetzwerk mit einer maximalen Übertragungsgeschwindigkeit von 50 kBps verwendet wird.

8. Verfahren nach Anspruch 7, **dadurch gekennzeichnet, dass** es sich bei dem Kommunikationsnetzwerk um ein 2G-GSM-Netzwerk handelt.

9. Verfahren nach Anspruch 7, **dadurch gekennzeichnet, dass** es sich bei dem Kommunikationsnetzwerk um ein Satellitennetzwerk handelt.

10. Verfahren nach Anspruch 7, **dadurch gekennzeichnet, dass** es sich bei dem Kommunikationsnetzwerk um ein Hochfrequenznetzwerk, z. B. ein LORA-Netzwerk, handelt.

## Revendications

1. Procédé de signalisation de la dynamique d'essaim d'insectes nuisibles, selon lequel les insectes nuisibles (1) sont capturés dans un piège (2), puis des images (7) des insectes nuisibles (1) capturés sont enregistrées au moyen d'un dispositif d'enregistrement d'images (6), et un paquet d'informations numérisé (20) est créé à partir de l'image (7) dans une unité locale d'information et de communication (3), puis le paquet d'informations numérisé (20) est transmis à une unité de traitement à accès distant (5) via un canal de communication (4), où l'image (7) est restaurée à partir du paquet d'informations numérisé (20), puis l'image (7) restaurée est évaluée, et ensuite une protection contre l'insecte nuisible (1) est mise en œuvre en fonction du résultat de l'évaluation, dans lequel, avant la transmission du paquet d'informations numérisé (20), au moins deux segments d'image numériques (31, 41) présentant un contenu d'information différent sont formés à partir de l'image (7) dans l'unité locale d'information et de communication (3), puis une étiquette d'information d'identification unique (32, 42) est associée à chacun des segments d'image numériques (31, 41), créant ainsi un élément d'information d'image divisé (30, 40) destiné à être transmis, l'étiquette d'information d'identification unique (32, 42) intégrant au moins des données d'identification d'origine (32a, 42a) du segment d'image numérique (31, 41) considéré, des données d'identification temporelle (32b, 42b), des données de séquence (32c, 42c) et des données de contrôle (32d, 42d), puis les différents éléments d'information d'image divisés (30, 40) sont alignés les uns après les autres, créant ainsi le paquet d'informations numérisé (20), puis les éléments d'information d'image divisés (30, 40) constituant le paquet d'informations numérisé (20) sont transmis les uns après les autres via le canal de communication (4) à l'unité de traitement à accès distant (5), puis les étiquettes d'information d'identification uniques (32, 42) des éléments d'information d'image divisés (30, 40) entrants sont d'abord lues dans l'unité de traitement à accès distant (5), puis les données de séquence (32c, 42c) sont interprétées, **caractérisé en ce que**, sur cette base, les segments d'image numériques (31, 41) des éléments d'information d'image divisés (30, 40) entrants sont remis dans le bon ordre et assemblés, produisant ainsi une information d'image numérique réunifiée (8), puis l'image (7) est restaurée au moyen de l'unité de traitement à accès distant (5) à partir de l'information d'image numérique réunifiée (8), et l'évaluation n'est effectuée qu'après cette étape.

2. Procédé selon la revendication 1, **caractérisé en ce qu'**un ou plusieurs capteurs de paramètres environnementaux (9) sont placés à proximité du piège (2), et qu'une ou plusieurs caractéristiques physiques de l'environnement du piège (2) sont mesurées, puis les caractéristiques physiques mesurées sont transmises à l'unité locale d'information et de communication (3), où la valeur de la caractéristique physique transmise est traitée, produisant ainsi des données environnementales traitées, ces données environnementales traitées étant ensuite intégrées dans l'étiquette d'information d'identification unique (32, 42) de l'élément d'information d'image divisé (30, 40) en tant que données environnementales (32e, 42e).

3. Procédé selon la revendication 2, **caractérisé en ce qu'**un capteur de température (9a), et/ou un capteur d'humidité (9b), et/ou un capteur de quantité de précipitations (9c), et/ou un capteur d'humectation foliaire (9d) sont utilisés comme capteur de paramètres environnementaux (9).

4. Procédé selon l'une quelconque des revendications 1 à 3, **caractérisé en ce que** l'identifiant de dispositif (10) du piège (2) considéré est utilisé comme données d'identification d'origine (32a, 42a) dans l'étiquette d'information d'identification unique (32, 42) de l'élément d'information d'image divisé (30, 40).

5. Procédé selon l'une quelconque des revendications 1 à 4, **caractérisé en ce que** les coordonnées GPS du piège (2) considéré sont utilisées comme données d'identification d'origine (32a, 42a) dans l'étiquette d'information d'identification unique (32, 42) de l'élément d'information d'image divisé (30, 40).

6. Procédé selon la revendication 1, **caractérisé en ce que** des éléments d'information d'image divisés (30, 40) d'une taille allant jusqu'à 50 kB sont créés.

7. Procédé selon l'une quelconque des revendications 1 à 5, **caractérisé en ce qu'**un réseau de communication à vitesse de transmission maximale de 50 kBps est utilisé comme canal de communication (4).

8. Procédé selon la revendication 7, **caractérisé en ce que** le réseau de communication est un réseau GSM 2G.

9. Procédé selon la revendication 7, **caractérisé en ce que** le réseau de communication est un réseau satellite.

10. Procédé selon la revendication 7, **caractérisé en ce que** le réseau de communication est un réseau radiofréquence, par exemple un réseau LORA.
